# EUROPÄISCHE PATENTSCHRIFT

(11) **EP 0 880 123 B1**
(45) Veröffentlichungstag und Bekanntmachung des Hinweises auf die Patenterteilung: **02.08.2000**
(21) Anmeldenummer: 98108212.6
(22) Anmeldetag: 06.05.1998
(51) Int. Cl.: G09B 19/08

(54) **Wörterbuch der alphabetischen Fremdsprache**
Dictionary for an alphabetic foreign language
Dictionnaire d'une langue étrangère alphabétique

(30) Priorität: 22.05.1997 UA 97052363
(43) Veröffentlichungstag der Anmeldung: 25.11.1998
(73) Patentinhaber: Batjuk, Vladimir Grigorievich, Kiev (UA)
(72) Erfinder: Batjuk, Vladimir Grigorievich, Kiev (UA)
(74) Vertreter: Sparing - Röhl - Henseler Patentanwälte

(56) Entgegenhaltungen:
- DE-A- 1 964 925
- DE-A- 3 625 248
- DE-A- 3 922 048
- US-A- 4 807 905

## Beschreibung

Die Erfindung betrifft Lehrmittel für Fremdsprachen und zwar die ein Alphabet aufweisenden Sprachen. Sie ist darauf gerichtet, eine Mehrzahl von fremdsprachigen Wortgruppen in einer bestimmten Reihenfolge gemäß den Endungen zusammenzustellen, und kann zum Behalten der Rechtschreibung, Aussprache und Übersetzung der gelernten Sprache dienen.

Ein gewöhnliches Fremdwörterbuch enthält in einer alphabetischen Reihenfolge angeordnete Stichwörter mit Transkription und Übersetzung. Solche Wörterbücher werden zum Übersetzen und Lernen der fremdsprachigen Wörter in Texten verwendet. Es wird dabei viel Zeit zum Aussuchen, Abschreiben und Behalten der Wörter verloren.

Am nächsten kommt der Erfindung ein Wörterbuch einer alphabetischen Fremdsprache, welches in Form eines Informationsträgers ausgeführt ist, auf welchem in einer Reihenfolge eine Mehrzahl der Wörter einer Fremdsprache angeordnet sind, wobei die Wörter, welche sich wenigstens mit einem Buchstaben unterscheiden und in Richtung vom Wortende zum -anfang die gleichen, mindestens ein Drittel der Wortbuchstaben ausmachenden Buchstabenfolgen enthalten, in die diesen Buchstabenfolgen entsprechenden abgesonderten Gruppen vereinigt werden und jedem Fremdsprachenwort die Übersetzung und /oder Transkription zugeordnet wird, wobei die erwähnten Wortgruppen im Wörterbuch beliebig angeordnet sind ( siehe Patent der Ukraine Nr. 9031, Int.Cl. G 09 B 19/06, 19/08, veröffentlicht am 30.09.96).

Im weiteren werden unter Buchstaben die graphischen Zeichen verstanden, die beim Schreiben, Drucken oder bei einer anderen Wiedergabe der Wörter einer alphabetischen Sprache verwendet werden.

Jede der oben erwähnten Gruppen stellt ein Wörterbuch dar, welches zum Behalten einer begrenzten Wortanzahl einer Fremdsprache benutzt werden kann. Da die Wörter in Leserichtung behalten werden, sind die Anfangsbuchstaben leichter als Endbuchstaben zu behalten, so wie die Wörter mit kleinerer Anzahl von Buchstaben leichter im Gedächtnis bleiben. Darum sind die erwähnten Wortgruppen so zusammengestellt, daß die gleichen Endbuchstaben einer sich wiederholenden Buchstabenfolge im Wort nur einmal für alle Wörter der Gruppe zu behalten sind. Je mehr Wörter in einer Gruppe enthalten sind, desto relativ weniger Zeit für Behalten jedes Wortes benötigt wird.

In einem Hunderte bis mehrere Tausende Wörter zählenden Wörterbuch ist eine große Anzahl der erwähnten Wortgruppen enthalten. Dabei sind die einen gleichen Endbuchstaben enthaltenden Wortgruppen so zusammengestellt, daß die Reihenfolge der Endbuchstaben einer Gruppe in Richtung vom Wortende zum -anfang eine Reihenfolge der anderen Gruppe und Endung einer solchen Folge einschließt. Dabei wird beim Ansteigen der Anzahl von gleichen Buchstaben in einer Reihenfolge die Anzahl der Wörter in dieser Gruppe reduziert. Deshalb wird zum Behalten der Wörter bei beliebiger Anordnung der Gruppen im Wörterbuch relativ mehr Zeit gebraucht.

Die Aufgabe der vorliegenden Erfindung besteht darin, ein Wörterbuch der alphabetischen Fremdsprache zu schaffen, welches durch eine neue Anordnung und Gestaltung einer Mehrzahl der gebildeten Gruppen von fremdsprachigen Wörtern mit, beginnend vom Ende, gleichen Buchstaben eine Zeiteinsparung beim Behalten ihrer Rechtschreibung, Aussprache und Übersetzung bringt.

Das erwähnte Resultat wird dadurch erreicht, daß im Wörterbuch einer alphabetischer Fremdsprache, ausgebildet in Form eines Informationsträgers, auf welchem eine Mehrzahl von Wörtern der Fremdsprache in einer Reihenfolge angeordnet ist, wobei die Wörter, die sich wenigstens durch einen Buchstaben voneinander unterscheiden und in Richtung vom Wortende zum -anfang eine Buchstabenfolge aufweisen, die wenigstens ein Drittel der Buchstaben im Wort enthält, in gesonderte Gruppen zusammengefaßt werden, und jedem fremdsprachigen Wort auf dem Träger seine jeweilige Übersetzung und/oder Transkription zugeordnet wird, wobei jede erwähnte Wortgruppe einer anderen Wortgruppe folgt, und zwischen den Wortgruppen ein Trennelement, wie z.B. ihre Bezeichnung oder eine leere Stelle des Trägers angeordnet ist, gemäß der Erfindung die Buchstabenfolge in Richtung vom Wortende zum -anfang die höchste Anzahl der gleichen Buchstaben mit der entsprechenden Buchstabenfolge der erwähnten Wortgruppe enthält.

Der Informationsträger mit darauf in einer Reihenfolge angeordneten Wortgruppen ist dabei vorzugsweise in Form eines Buches ausgebildet, welches Abschnitte enthält, in welchen die fremdsprachigen Wörter jeweils den gleichen Endbuchstaben aufweisen, wobei auf einer Seite wenigstens ein Spaltenpaar angeordnet ist, wobei in jedem Spaltenpaar eine Spalte die in die erwähnten Folgegruppen zusammengefaßten fremdsprachigen Wörter und die andere Spalte die Übersetzung und/oder die Transkription zu jedem fremdsprachigen Wort aus der ersten Spalte enthält.

Es ist auch vorteilhaft, daß auf dem Informationsträger in einer Reihenfolge Wortgruppen angeordnet sind, von welchen in jeder die erwähnte Buchstabenfolge in Richtung von Wortende zum -anfang jeweils maximale, gleiche Anzahl der gleichen Buchstaben aufweist.

Es ist weiterhin vorteilhaft, daß die fremdsprachigen Wörter in den erwähnten Wortgruppen auf dem Informationsträger nach dem letzten Buchstaben ausgerichtet und die erwähnten Buchstabenfolgen in den Wörtern hervorgehoben sind.

Vorteil des vorgeschlagenen Wörterbuchs besteht darin, daß die in einer Reihenfolge angeordneten Wortgruppen eine jeweils maximale Anzahl der gleichen Endbuchstaben aufweisen. Nachdem die gleichen Endbuchstaben in den Wörtern einer solchen Gruppe behalten sind, fällt das Behalten der gleichen Buchstaben in den Wörtern der anderen, nebenbei angeordneten Gruppe entsprechend leichter. Es erlaubt somit eine größere Anzahl von Wörtern mit kleinerem Zeitaufwand zu behalten.

Das Wesen der Erfindung wird anhand einer Zeichnung näher erläutert, in der ein Fragment eines gemäß der Erfindung ausgebildeten Wörterbuchs dargestellt ist.

Zur Erläuterung des Erfindungswesens werden 15 fremdsprachige Wörter verwendet. Diese 15 Wörter dienen lediglich zur Illustration, wobei die Anzahl der fremdsprachigen Wörter im Wörterbuch gemäß der vorliegenden Erfindung Hunderte bis Zehntausende Wörter betragen kann.

Nach der vorliegenden Erfindung kann das Wörterbuch in Form eines Buches gestaltet werden, welches Abschnitte enthält, die jeweils die fremdsprachigen Wörter mit dem gleichen Endbuchstaben aufweisen. Das Buch kann einen beliebigen Aufbau, zum Beispiel, Einband, weichen oder harten Umschlag usw. haben. Zusätzlich zu den erwähnten Abschnitten kann es auch andere Abschnitte enthalten, welche gewöhnlich den Veröffentlichungen mit Wortfolgen beigegeben werden.

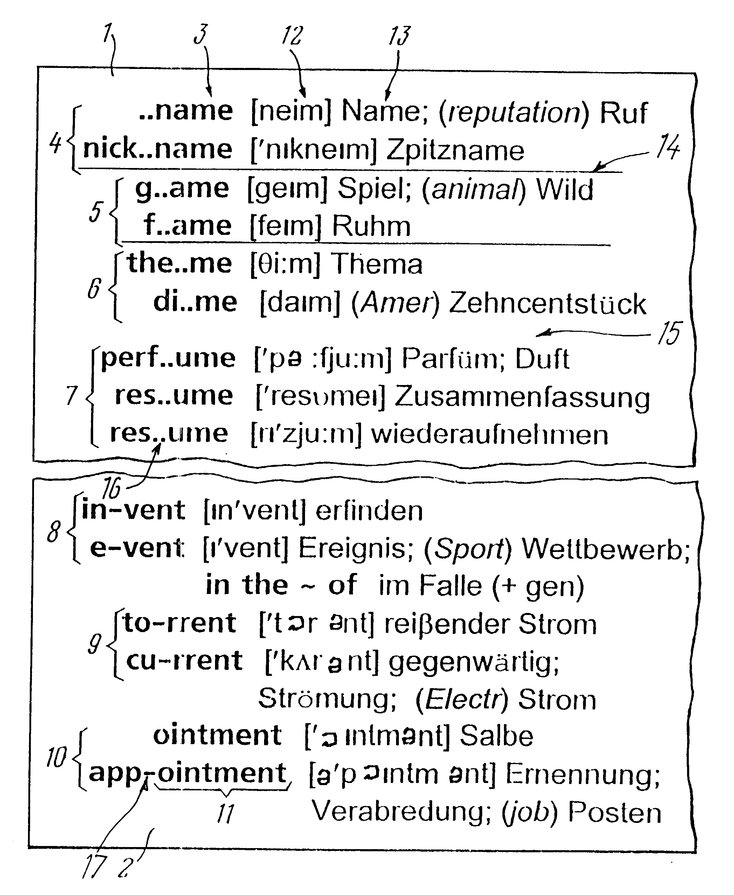

In der Figur sind als Beispiel die Abschnitte 1 und 2 gezeigt, in welchen die fremdsprachigen, zum Beispiel englischen Wörter 3 jeweils einen gleichen Endbuchstaben aufweisen. Der Abschnitt 1 enthält 9 Wörter, welche mit dem Buchstaben "e" enden. Der Abschnitt 2 enthält 6 Wörter, welche mit dem Buchstaben "t" enden.

Auf einer Seite ist ein Spaltenpaar untergebracht. In der ersten Spalte sind in einer Reihenfolge die fremdsprachigen Wörter 3 angeordnet, die in hervorgehobene Gruppen 4, 5, 6 und 7 im Abschnitt 1 und in hervorgehobene Gruppen 8, 9 und 10 im Abschnitt 2 zusammengefaßt sind. Wörter 3 sind in die erwähnten Gruppen nach den in Richtung vom Wortende zum -anfang folgenden, jeweils gleiche, sich wiederholende Buchstabenfolgen 11 bildenden Buchstaben zusammengefaßt. In Gruppe 7 bestehen zwei Wörter "resume" aus gleicher Buchstabenfolge und werden als ein Wort gemäß ihrer Rechtschreibung im Gedächtnis behalten, deshalb hat es keinen Sinn, sie in eine selbständige Wortgruppe abzusondern.

Die andere Spalte des Abschnitts enthält die Transkription 12 und die Übersetzung 13, zum Beispiel in die deutsche Sprache, welche jedem fremdsprachigen Wort 3 der ersten Spalte zugeordnet sind.

Jede abgesonderte Wortgruppe folgt im Wörterbuch einer anderen Wortgruppe, deren sich wiederholende Buchstabenfolge in Richtung vom Wortende zum -anfang eine maximale Anzahl der gleichen Buchstaben mit der jeweiligen Buchstabenfolge der ersten erwähnten Gruppe enthält. So hat die Folge 11 in den Wörtern der Gruppe 4 die maximale Buchstabenanzahl, und zwar 3 Buchstaben, die mit der Buchstabenfolge 11 in den Wörtern der Gruppe 5 gleich sind. Das gleiche gilt für die Gruppe 5 bezüglich der Gruppe 4. Folge 11 in den Wörtern der Gruppe 6 hat zwei mit den Buchstabenfolgen 11 in den Wörtern der Gruppen 4, 5 und 7 gleiche Buchstaben. Das gilt auch für die Gruppe 7 bezüglich der Gruppen 4, 5 und 6. Die Buchstabenfolgen 11 in den Wörtern der Gruppen 4 und 5 enthalten ihrerseits die gleiche Buchstabenanzahl, und zwar 2 Buchstaben, welche mit den Buchstabenfolgen 11 in den Wörtern der Gruppen 6 und 7 gleich sind. Dieselbe Buchstabenfolgen 11 in den Wörtern der Gruppen 4 und 5 haben jedoch untereinander eine größere Anzahl der gleichen Buchstaben, als mit der Gruppe 6 oder 7. Darum sind die Gruppen 4 und 5 nacheinander angeordnet und zwischen ihnen keine Gruppe 6 oder 7 liegt.

Die Gruppe 6 kann vor der Gruppe 4 und die Gruppe 7 kann hinter der Gruppe 5 angeordnet werden. Und umgekehrt, die Gruppe 7 kann vor der Gruppe 4 und die Gruppe 6 nach der Gruppe 5 angeordnet werden. Um die Aufnahme der Besonderheit der fremdsprachigen Wörter zu beschleunigen, sind die Gruppen 6 und 7 nacheinander angeordnet, da in diesen Gruppen die sich wiederholenden Buchstabenfolgen eine gleiche, für sie maximale Anzahl der gleichen Buchstaben aufweisen. Auf diese Weise sind nacheinander folgende Gruppen 6 und 7 aus den Gruppen des Abschnitts 1 abgesondert. Mit gleichem Erfolg können nacheinander angeordnete Gruppen 6 und 7 vor den einander folgenden Gruppen 4 und 5 und, wie in der Figur gezeigt ist, oder nach ihnen angeordnet werden.

Im Abschnitt 2 die Buchstabenfolge 11 in den Wörtern der Gruppe 8 enthält maximale Anzahl von Buchstaben, die mit der Buchstabenfolge 11 in den Wörtern der Gruppen 9 und 10 gleich sind. Das gilt auch für die Gruppe 9 im Bezug auf die Gruppen 8 und 10, sowie für die Gruppe 10 im Bezug auf die Gruppen 8 und 9. Buchstabenfolgen 11 in den Wörtern der Gruppen 8, 9 und 10 weisen die gleiche, für sie jeweils maximale Anzahl von Buchstaben. Die angegebenen Gruppen können einander in beliebiger Kombination folgen, zum Beispiel wie es in der Figur gezeigt ist.

Für eine bequemere visuelle Aufnahme ist jede fremdsprachige Wortgruppe bezüglich der nächstliegenden Gruppen hervorgehoben. Zu diesem Zweck sind einander folgende Gruppen 4, 5 und 6 durch ein Trennelement, zum Beispiel durch eine Gerade 14 voneinander getrennt. Zwischen den Gruppen 6 und 7, 8 und 9, 9 und 10 ist jeweils eine leere Stelle des Trägeres 15 vorgesehen, welche die besagten Gruppen voneinander trennt. Die sich in den fremdsprachigen Wörtern wiederholenden Endbuchstabenfolgen 11 sind, wie in der Figur gezeigt ist, durch Punkte 16 in den Gruppen 4, 5, 6, und 7 oder durch Trennstrich 17 in den Gruppen 8, 9 und 10 abgesondert. Die fremdsprachigen Wörter sind nach dem letzten Buchstaben in der Spalte wie im Abschnitt 1 oder in der Gruppe wie im Abschnitt 2 ausgerichtet. Die Trennelemente 14, die eine Wortgruppe von der anderen trennen, sowie die Wörter selbst und die sich wiederholenden Buchstabenfolgen 11 in den Wörtern einer Gruppe können auf einem anderen Hintergrund und/oder mit einer anderen Farbe oder mit einer anderen Schrift(Größe), oder mittels spezieller Linien, Zeichen, Symbolen, Punkte oder dgl. abgebildet werden.

Nach einer bevorzugten Ausgestaltung der Erfindung enthält jede Wörterbuchseite zwei Spaltenpaare, um die Fläche des Informationsträgers rationell zu nutzen.

Das Zusammenstellen von einander folgenden Gruppen aus einer beliebigen Anzahl der fremdsprachigen Wörter stellt kein technisches Problem dar, erfordert keine Kenntnisse der Fremdsprache, der Transkription und der Übersetzung. Als Informationsträger kann Papierblatt, Magnetband, Diskette, Hard-disk oder Display dienen. Die Wörterbücher werden in Form von Büchern, Bücherteilen, Broschüren, Tabellen, Karten, Kalender, Magnetbändern, Disken usw. hergestellt. Sie werden in den Lehrbüchern, Studienheften, in Nachschlagwerken sowie in den technischen Mitteln untergebracht.

Das Wörterbuch kann an die einzelnen Altersgruppen oder Lernstufen angepaßt werden, in Abhängigkeit vom Wissensbereich oder der professionellen Orientation der Lernenden eine Fremdsprache spezialisiert werden.

## Patentansprüche

1. Wörterbuch der alphabetischen Fremdsprache, ausgebildet in Form eines Informationsträgers, auf welchem in einer Reihenfolge eine Mehrzahl von fremdsprachigen Wörtern (3) angeordnet ist, wobei die Wörter (3), die sich voneinander wenigstens um einen Buchstaben unterscheiden und in Richtung vom Wortende zum -anfang eine Buchstabenfolge (11) enthalten, die wenigstens ein Drittel der Buchstaben im Wort ausmacht, in hervorgehobene Gruppen (4 bis 10) zusammengefaßt sind, und jedem fremdsprachigen Wort (3) auf dem Informationsträger seine jeweilige Übersetzung (13) und/oder Transkription (12) zugeordnet ist, wobei jede erwähnte Wortgruppe (4 bis 10) in einer Reihenfolge mit einer anderen Wortgruppe (4 bis 10) angeordnet ist, und sich zwischen den Wortgruppen (4 bis 10) ein Trennelement, wie zum Beispiel ihre Bezeichnung oder eine leere Stelle (15) befindet, **dadurch gekennzeichnet,** daß die Buchstabenfolge der einen Wortergruppe (11) in Richtung vom Wortende zum -anfang eine maximale Anzahl der gleichen Buchstaben mit der entsprechenden Buchstabenfolge (11) der anderen Wortgruppe (4 bis 10) enthält.

2. Wörterbuch nach Anspruch 1, **dadurch gekennzeichnet,** daß der Informationsträger mit den erwähnten, in einer Reihenfolge angeordneten Wortgruppen (4 bis 10) in Form eines Buches ausgebildet ist, welches Abschnitte (1, 2) enthält, in welchen jeweils die fremdsprachigen Wörter (3) mit dem gleichen Endbuchstaben enthalten sind, wobei Buchseiten mindestens ein Spaltenpaar aufweisen, wobei in jedem Spaltenpaar eine Spalte die fremdsprachigen Wörter (3) enthält, welche in die erwähnten nacheinander folgenden Gruppen (4 bis 10) zusammengefaßt sind, und die andere Spalte Übersetzung (13) und/oder Transkription (12) zu jedem zugehörenden fremdsprachigen Wort (3) aus der ersten Spalte enthält.

3. Wörterbuch nach Ansprüchen 1 oder 2, **dadurch gekennzeichnet,** daß auf dem Informationsträger in einer Reihenfolge die Wortgruppen (4 bis 10) angeordnet sind, von welchen in jeder die erwähnte Buchstabenfolge (11) in Richtung vom Wortende zum Wortanfang eine maximale, für sie jeweils gleiche Anzahl der gleichen Buchstaben aufweist.

4. Wörterbuch nach einem der vorhergehenden Ansprüche, **dadurch gekennzeichnet**, daß die fremdsprachigen Wörter (3) in den erwähnten Gruppen (4 bis 10) auf dem Informationsträger nach dem letzten Buchstaben ausgerichtet und die erwähnten Buchstabenfolgen (11) in den Wörtern hervorgehoben sind.

## Claims

1. A dictionary of an alphabetic foreign language, designed in the form of an information carrier, on which a plurality of foreign-language words (3) are arranged in a sequence, wherein the words (3), which differ from one another by at least one letter and in the direction from the end to the beginning of the word contain a sequence of letters (11) which amounts to at least one third of the letters in the word, are grouped together in highlighted groups (4 to 10), and each foreign-language word (3) on the information carrier has its respective translation (13) and/or transcription (12) associated therewith, wherein each above-mentioned word group (4 to 10) is arranged in a sequence with another word group (4 to 10) and a separating element, such as for example its designation or an empty space (15), is present between the word groups (4 to 10), **characterized in that** the sequence of letters (11) of one word group in the direction from the end to the beginning of the word contains a maximum number of similar letters with the corresponding sequence of letters (11) of the other word group (4 to 10).

2. A dictionary according to Claim 1, **characterized in that** the information carrier with the above-mentioned word groups (4 to 10) arranged in a sequence is designed in the form of a book containing sections (1, 2) in which the foreign-language words (3) are present with the same final letters in each case, wherein pages of the book have at least one pair of columns, wherein in each pair of columns one column contains the foreign-language words (3) which are grouped together in the above-mentioned groups (4 to 10) following one after the other, and the other column contains a translation (13) and/or a transcription (12) for each associated foreign-language word (3) from the first column.

3. A dictionary according to Claim 1 or 2, **characterized in that** the word groups (4 to 10) are arranged in a sequence on the information carrier, and in each of the word groups (4 to 10) the above-mentioned sequence of letters (11) has - in the direction from the end to the beginning of the word - a maximum number of the same letters which is the same for it in each case.

4. A dictionary according to one of the preceding Claims, **characterized in that** the foreign-language words (3) are orientated in the above-mentioned groups (4 to 10) on the information carrier in accordance with the last letters and the above-mentioned sequences of letters (11) are highlighted in the words.

## Revendications

1. Dictionnaire de langue étrangère alphabétique, réalisé sous la forme d'un support d'information sur lequel une pluralité de mots (3) de langue étrangère est disposée en une succession. les mots (3) qui se distinguent les uns des autres au moins par une lettre et contiennent une succession de lettres (11) dans la direction allant de la fin vers le début du mot, succession faisant au moins un tiers des lettres dans le mot, sont regroupées en des groupes (4 à 11) mis en évidence, et à chaque mot (3) de langue étrangère étant associé sur le support d'information sa traduclion (13) et/ou sa transcription (12) respective, où chaque groupe de mots (4 à 10) mentionné succède à un autre groupe de mots (4 à 10), et entre les groupes de mots (4 à 10) se trouve un élément de séparation, tel que, par exemple, sa désignation ou bien un emplacement vide (15) de support, caractérisé en ce que la succession de lettres d'un groupe de mots (11) contient, dans la direction allant de la fin au début du mot, un nombre maximal de lettres identiques avec la succession de lettres (11) correspondant du groupe de mots (4 à 10).

2. Dictionnaire selon la revendication 1, caractérisé en ce que le support d'information avec les groupes de mots (4 à 10) mentionnés disposés en un ordre est réalisé sous la forme d'un livre qui contient des sections (1,2), dans chacune desquelles les mots (3) en langue étrangère sont contenus avec les mêmes lettres de fin, les pages du livre présentant au moins une paire de colonnes, dont une colonne contient les mots (3) en langue étrangère, qui sont regroupés en donnant les groupes (4 à 10) mentionnés se suivant les uns les autres, et l'autre colonne contenant la traduction (13) et/ou la transcription (12) de chaque mot (3) en langue étrangère de la première colonne.

3. Dictionnaire selon la revendication 1 ou 2, caractérisé en ce que sur le support d'information les groupes de mots (4 à 10) sont disposés en un ordre de succession, groupes de mots dont, dans chacun, la succession de lettres (11) mentionnée présente, dans la direction allant de la fin de mot au début du mot, un même nombre maximal des mêmes lettres.

4. Dictionnaire selon l'une des revendications précédentes, caractérisé en ce que les mots (3) en langue étrangère dans les groupes (4 à 10) mentionnés sur le support d'information, sont classés selon la dernière lettre, et que les successions de lettres (11) mentionnées sont mises en évidence dans les mots.
